# FASCICULE DE BREVET EUROPEEN

(11) **EP 0 494 838 B1**
(45) Date de publication et mention de la délivrance du brevet: **15.12.1993**
(21) Numéro de dépôt: 92420009.0
(22) Date de dépôt: 09.01.1992
(51) Int. Cl.: C02F 1/48

(54) **Appareil pour le traitement anti-tartre de l'eau par utilisation d'un champ magnétique**
Apparat zur Entkalkung von Wasser durch ein magnetisches Feld
Apparatus for descaling water by means of a magnetic field

(30) Priorité: 11.01.1991 FR 9100387
(43) Date de publication de la demande: 15.07.1992
(73) Titulaire: KERANBO S.A.R.L., F-74240 Gaillard (FR)
(72) Inventeur: Bochaton, Pierre, F-74100 Ambilly (FR)
(74) Mandataire: Gasquet, Denis

(56) Documents cités:
- EP-A- 0 325 185
- EP-A- 0 348 551
- DE-U- 8 904 085
- US-A- 4 366 053
- PATENT ABSTRACTS OF JAPAN vol. 12, no. 446 (C-546)24 Novembre 1988

## Description

La présente invention est relative aux appareils pour le traitement anti-tartre de l'eau contenant du carbonate de calcium, dans lesquels l'eau est soumise à un parcours autour d'une colonne aimantée avantageusement constituée d'un empilage d'aimants permanents.

On connait déjà différents dispositifs de ce type, ayant pour but d'éviter l'entartrage à l'intérieur des canalisations, réservoirs ou corps chauffants, des préparateurs d'eau chaude et de vapeur.

L'un des procédés consiste à faire circuler l'eau à travers un champ magnétique créé par plusieurs aimants permanents juxtaposés de telle manière que les pôles voisins soient de même nature et séparés entre eux ainsi qu'à chaque extrémité, par des entretoises de fer à faible teneur en carbone.

Le principe de fonctionnement de ces appareils est de perturber et changer la forme cristalline des particules ou colloïdes, constituées d'agrégats de molécules non dissociés contenues dans l'eau. Dans le circuit, étant chargées électro-statiquement, ces particules colloïdales vont s'agglomérer et former des cristaux qui seront entrainés par le flux de l'eau, tout en ayant un effet curatif sur le tartre déjà incrusté à l'intérieur des conduites.

On sait que l'écoulement de l'eau dans le champ magnétique est une des conditions à remplir pour permettre l'action sous forme incrustante du calcaire. Pour que le fonctionnement des appareils soit efficace, la trajectoire de l'eau doit avoir une longueur la plus grande possible.

Tous les dispositifs connus qui emploient des rainures chicanes ou trous provoquant l'écoulement hélicoïdal, laissent apparaître des inconvénients : écoulement de l'eau sur une colonne d'aimants de forme cylindrique et de longueur importante due à la quantité et la qualité des aimants.

Ces aimants doivent avoir une longueur de 2 fois et plus, le diamètre de ceux-ci.

Ceci oblige des appareils avec de grandes longueurs pouvant présenter des difficultés de pose dans certains cas.

Selon la forme cylindrique des aimants, l'eau ne peut passer qu'à l'extérieur; ceci implique que l'espace annulaire où circule l'eau soit réduit et de la sorte ne doit comporter qu'une seule rainure ou chicane ou passage sur le pourtour.

La présente invention vise à remédier à ces inconvénients proposant un appareil d'un diamètre plus important mais d'une longueur considérablement réduite.

Ainsi, l'appareil de traitement de l'eau selon l'invention, d'axe de symétrie générale comprend une colonne d'aimants permanents contenus dans un tube interne et un tube externe et comprenant un embout inférieur et un embout supérieur, l'eau entrant dans l'appareil par un orifice d'entrée et sortant de celui-ci par une orifice de sortie, tandis qu'elle circule dans l'appareil dans un espace périphérique ménagé entre ledit tube interne et ledit tube externe, et est caractérisé en ce que l'espace périphérique comprend une succession de rainures s'étendant entre l'embout inférieur et l'embout supérieur reliées successivement les unes aux autres par une chicane supérieure, puis une chicane inférieure, chacune des rainures étant limitée latéralement par des nervures en saillie.

Selon l'une des variantes, les rainures sont parallèles les unes aux autres et sont inclinées pour former un angle aigu par rapport à un plan diamétral passant par l'axe général de l'appareil.Selon une autre variante celles-ci sont parallèles à cet axe.

Selon une disposition particulière, la nervure en saillie séparant la rainure d'entrée d'eau de la rainure de sortie d'eau, s'étend sur toute la hauteur de l'espace périphérique, tandis que les autres nervures sont plus courtes pour s'étendre alternativement que sur la partie inférieure et sur la partie supérieure, pour créer ainsi les chicanes respectivement supérieures et inférieures.

Selon une variante, toutes les nervures en saillie s'étendent sur la hauteur totale de l'espace périphérique et les chicanes supérieures et inférieures sont réalisées dans l'embout supérieur ou dans une pièce de forme supérieure et dans l'embout inférieur ou dans une pièce de forme inférieure.

Selon une caractéristique complémentaire, les rainures sont disposées sur la paroi périphérique externe du tube interne, tandis que dans une variante, elles sont disposées sur la paroi périphérique interne du tube externe, et tandis que dans une autre variante, elles sont disposées sur la paroi d'un tube indépendant intermédiaire.

Selon l'une des dispositions, l'embout inférieur comprend un orifice d'entrée d'eau, tandis que l'embout supérieur comprend l'orifice de sortie d'eau. Dans une variante, l'embout inférieur comprend l'orifice d'entrée et l'orifice de sortie d'eau.

Les caractéristiques de l'invention et ses avantages apparaîtront à la lumière de la description qui suit et pour laquelle on se référera aux dessins, dont :
- Les figures 1 à 3 illustrent un premier mode d'exécution d'un appareil selon l'invention.
- La figure 1 est une vue en coupe selon un plan diamétral du premier mode d'exécution.
- La figure 2 représente le sens de passage de l'eau selon un angle par rapport à l'axe (XX') d'aimantation des aimants en forme de bagues.
- La figure 3 représente la circonférence développée du tube dans lequel sont logés les aimants et sur lequel sont usinées les rainures et les pièces de forme qui autorisent le passage d'une rainure à l'autre.
- La figure 3a est une vue similaire à la figure 3, montrant une variante de réalisation du premier mode d'exécution.
- La figure 4 est une vue similaire à la figure 2, illustrant une variante selon laquelle un passage de l'eau par le diamètre intérieur des aimants bagues autorise un chemin plus long du circuit hélicoïdal de l'eau au contact des aimants.

- Les figures 5 à 9 illustrent une autre variante de réalisation.

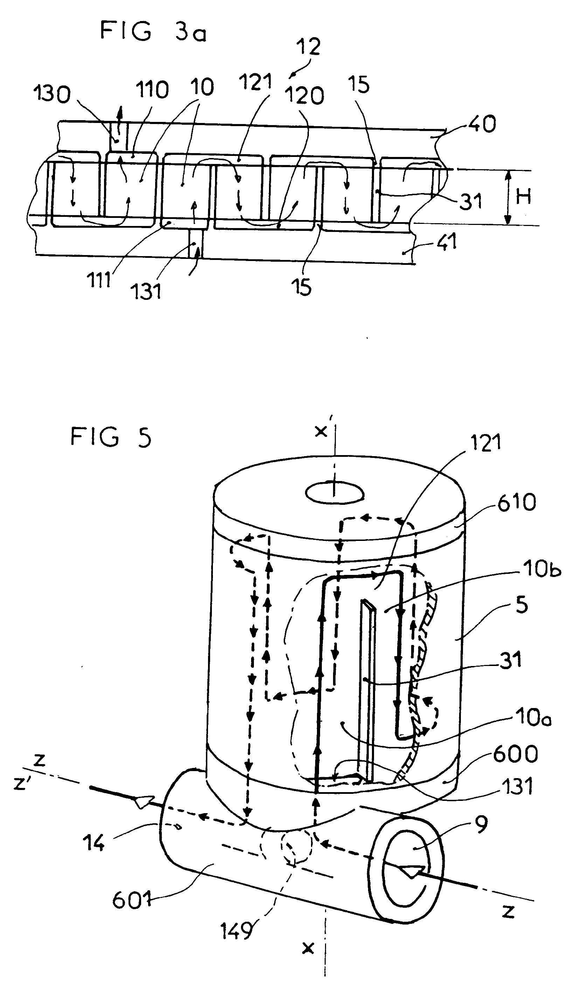

- La figure 5 est une vue en perspective avec arrachement partiel.

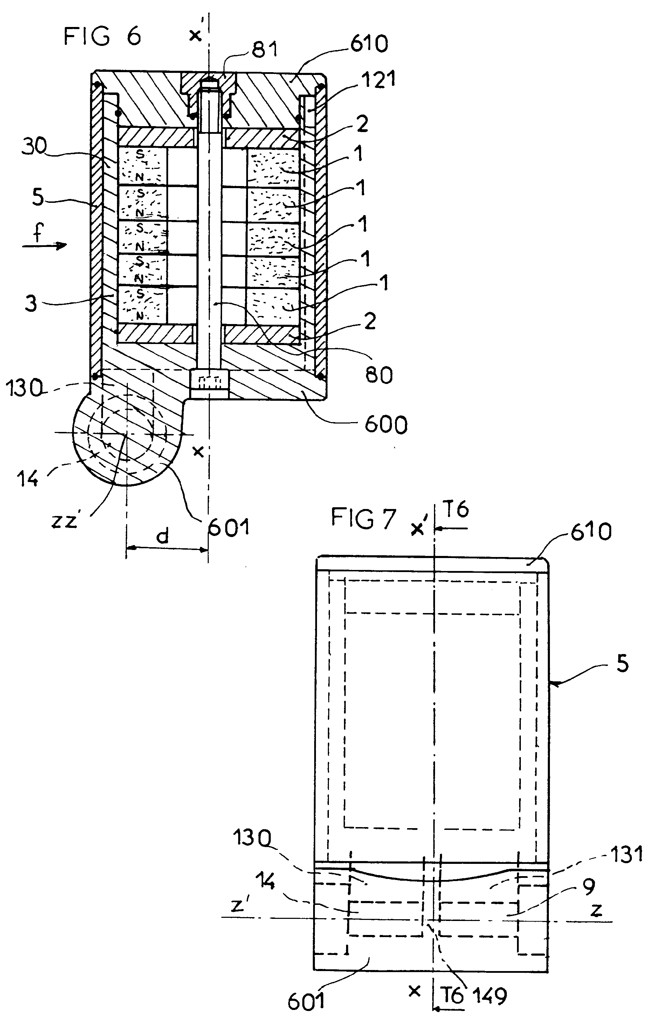

- La figure 6 est une vue latérale en coupe axiale selon T6-T6.
- La figure 7 est une vue latérale extérieure selon f de la figure 6.

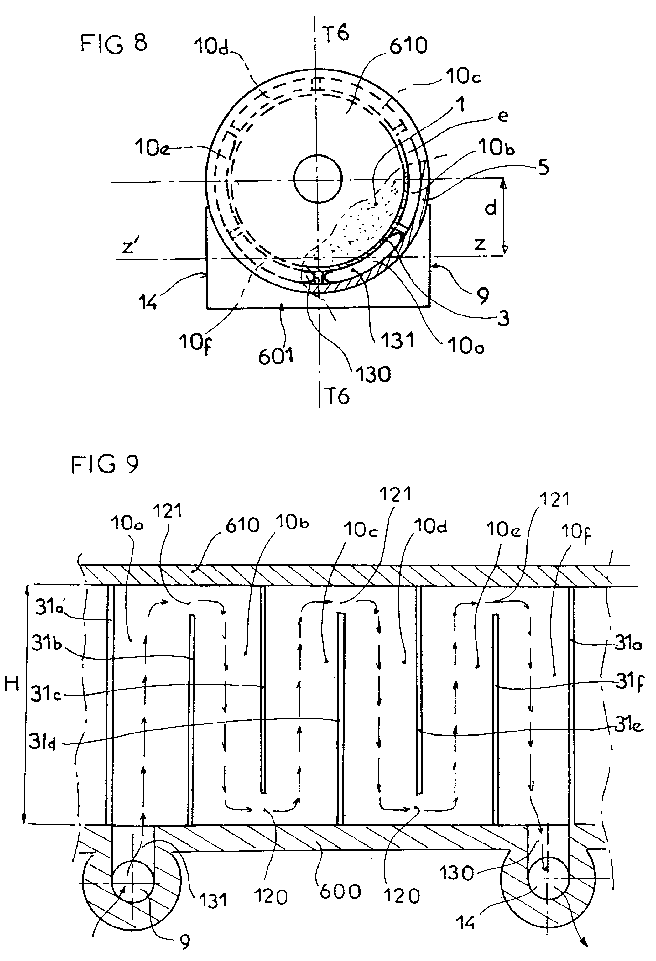

- La figure 8 est une vue de dessus avec arrachement partiel.

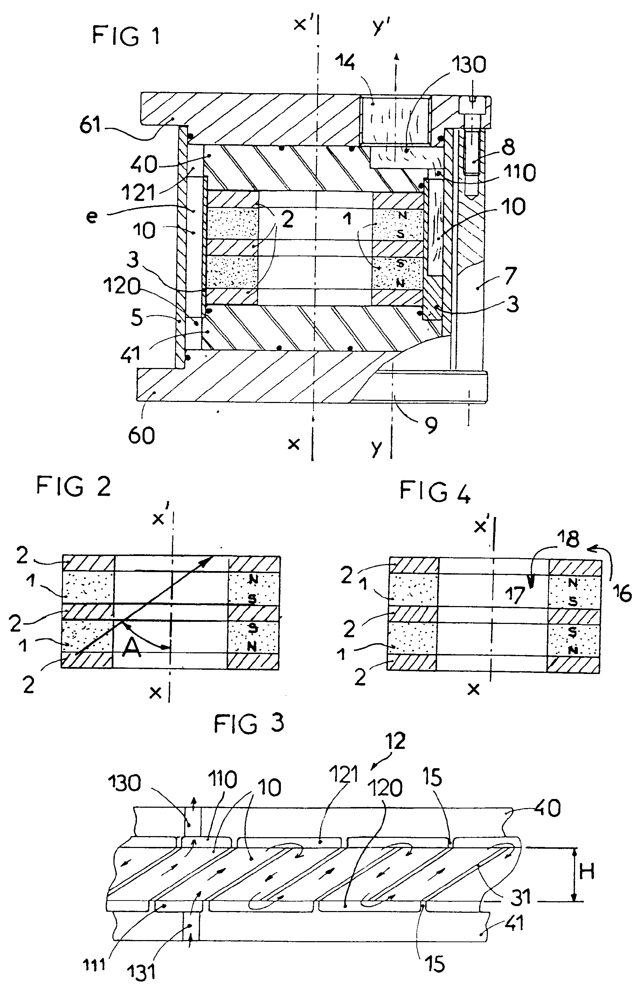

- La figure 9 est une vue similaire à la figure 3 représentant la circonférence développée du tube.

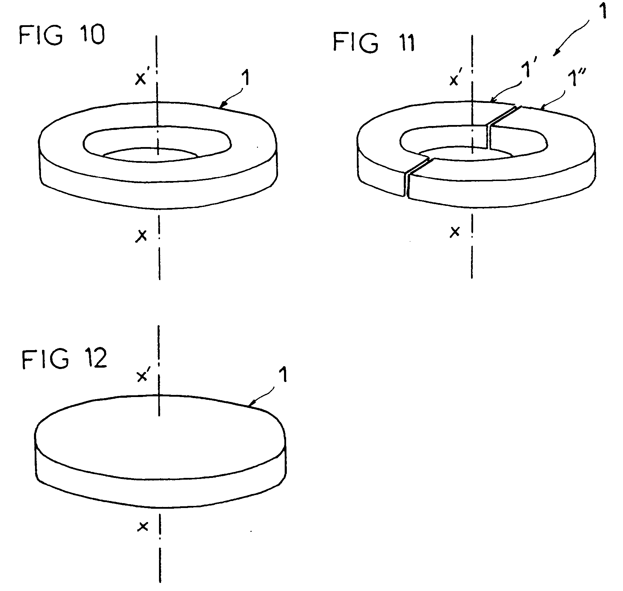

- La figure 10 est une vue en perspective d'un aimant.
- Les figures 11 et 12 sont des vues similaires à la figure 10 montrant des variantes de réalisation des aimants.

Les figures 1 à 3 représentent un premier mode de réalisation selon lequel le parcours de l'eau est hélicoïdal. Le champ magnétique est obtenu grâce à une colonne d'aimants constituée par un empilage d'aimants (1) ayant la forme de bagues annulaires, chacun des aimants étant séparé de l'aimant suivant par une entretoise (2) en fer doux. L'ensemble constitué par les aimants (1) et les entretoises (2) étant logé dans un tube interne (3) magnétiquement neutre dont la paroi périphérique comprend une succession de rainures (10). Deux pièces de forme (40, 41), une pièce de forme supérieure (40) et une pièce de forme inférieure (41), comprennent une succession de chicanes (12) permettant le passage de l'eau d'une rainure à l'autre. Chacune des chicanes (12) est constituée par un profil en creux séparé de la chicane suivante par un pied de pont (15) constitué par une paroi sensiblement verticale. Des chicanes terminales (111, 110) permettent d'une part l'entrée (131), et d'autre part, la sortie (130) de l'eau.

L'ensemble constitué par les aimants (1), les entretoises (2) et le premier tube (3) est disposé dans un ensemble constitué par un tube extérieur (5) en fer doux et deux embouts (60, 61). Le tube extérieur (5) a un diamètre intérieur égal au diamètre extérieur du tube interne (3) comprenant les rainures (10).

Les embouts (60, 61) d'axe (XX') permettent l'entrée et la sortie de l'eau. Ainsi, l'embout inférieur (60) comprend un trou d'entrée d'eau fileté inférieur (9), l'embout supérieur (61) comprenant un trou similaire (14) de sortie de l'eau. L'entrée (9) et la sortie (14) sont avantageusement alignées selon un axe (YY') excentré par rapport à l'axe général (XX') du filtre et sont destinées à être raccordées à la conduite d'eau à traiter. (La conduite d'eau n'étant pas représentée).

Selon le premier mode d'exécution, le parcours de l'eau dans les rainures (10) est hélicoïdal, et ce parcours hélicoïdal est obtenu grâce à l'inclinaison des rainures selon un angle aigu (A) par rapport à un plan diamétral passant par l'axe (XX'), et réalisé sur le tube (3), comme cela est représenté plus particulièrement aux figures 2 et 3. La longueur du parcours en chicane étant obtenu par les différentes rainures (10) reliées les unes aux autres par les chicanes (12), et notamment par les chicanes inférieures (120) et supérieures (121).

Ainsi et comme cela est illustré à la figure 3, l'eau entre par le passage (131) de la pièce de forme inférieure (41) pour arriver dans la rainure (10). La chicane supérieure (121) entraîne alors l'eau dans la rainure suivante, les pieds de pont ou parois (15) assurant le joint d'une chicane à l'autre, et ainsi de suite jusqu'à la dernière rainure (110) de sortie, située avant la rainure (10) d'entrée. Par la chicane terminale (110), l'eau est canalisée dans le passage de sortie (130) autorisant sa sortie par le trou (14) de l'embout (61).

La figure 3a illustre une variante selon laquelle le parcours de l'eau ne se fait pas de façon inclinée par rapport à l'axe (XX') du filtre. Selon cette variante, les rainures ne sont pas inclinées, mais sont parallèles à l'axe (XX') de symétrie générale. Il est à noter que dans le mode d'exécution des figures 1 à 3, l'eau est canalisée sur le diamètre extérieur des aimants-bagues (1) par les rainures (10).

La figure 4 illustre une variante représentée de façon schématique, dans laquelle des canaux (18) amènent l'eau dans des chicanes (12) et des rainures (10) qui sont disposées sur le diamètre intérieur (17) des aimants-bagues, et font ainsi circuler l'eau à l'intérieur des aimants-bagues de la même façon qu'à l'extérieur. De même, dans un autre mode d'exécution, l'eau pourrait passer alternativement de l'extérieur (16) à l'intérieur (17) par des canaux (18), et ainsi de suite sur le pourtour extérieur (16) et intérieur (17) desdits aimants-bagues. La liaison de l'ensemble est assuré par des entretoises cylindriques (7) fixées par des vis (8) aux deux embouts (60, 61).

Notons que chaque rainure (10) est séparée de la rainure adjacente par une nervure en saillie (31) qui, dans la réalisation de la figure 3, est inclinée, tandis que dans la réalisation de la figure 3a, elle est parallèle à l'axe (XX'). Notons aussi que dans les modes de réalisation des figures 1, 2, 3, 3a et 4, toutes les nervures en saillie (31) séparant les rainures de circulation d'eau s'étendent sur la hauteur totale (H) de l'espace périphérique (e), et les chicanes supérieures et inférieures sont réalisées dans la pièce de forme supérieure (40) et dans la pièce de forme inférieure (41). Les nervures en saillie (31) pourraient d'ailleurs être réalisées directement dans les embouts (60) et (61).

Les figures 5 à 9 illustrent une variante de réalisation. Comme précédemment, le filtre comprend un empilage d'aimants permanents (1) contenu dans un tube interne (3) magnétiquement neutre dont la paroi périphérique (30) comprend une succession de rainures (10) parallèles à l'axe (XX'). Par ailleurs, le filtre comprend aussi un tube extérieur (5), l'eau circulant autour des aimants entre la paroi du tube interne (3) et la paroi du tube externe (5). D'autre part, les extrémités inférieures et supérieures des tubes interne (3) et externe (5) sont fermées par un embout inférieur (600) et un embout supérieur (610). Par ailleurs, selon cette variante, le tube interne (3) contenant l'empilage d'aimants (1) est solidaire de l'embout inférieur (600) comprenant une saillie inférieure transversale (601) de forme générale tubulaire d'axe (ZZ'). Cette saillie inférieure (601) comprend d'une part l'orifice d'entrée d'eau (9), et d'autre part, l'orifice de sortie d'eau (14). L'axe (ZZ') étant perpendiculaire à l'axe (XX') et s'en trouvant à une distance (d). L'orifice d'entrée d'eau (9) et l'orifice de sortie d'eau (14) étant séparés par une paroi d'obturation (149). Selon ce mode de réalisation, la paroi périphérique (30) du tube interne (3) comprend six rainures (10) séparées par six nervures en saillie (31) parallèles les unes aux autres. La première rainure (10a) est reliée directement à l'orifice d'entrée d'eau (9) par un conduit d'entrée (131), tandis que la dernière rainure (10f) est reliée à l'orifice de sortie d'eau (14) par un conduit de sortie (130). Afin d'assurer le passage de l'eau d'une rainure à l'autre, les nervures en saillie (31) sont interrompues alternativement en haut et en bas pour constituer des chicanes inférieures (120) et supérieures (121). Ainsi, la nervure en saillie (31a) séparant la rainure d'entrée d'eau (10a) s'étend sur toute la hauteur (H) de l'espace périphérique (e), tandis que les autres nervures (31b, 31c, 31d, 31e, 31f) sont plus courtes pour s'étendre alternativement que sur la partie inférieure et sur la partie supérieure, pour créer ainsi les chicanes respectivement supérieure (121) et inférieure (120).

Notons aussi que dans ce mode de réalisation, les nervures pourraient s'étendre sur toute la hauteur de l'espace périphérique comme dans les réalisations précédentes, et dans ce cas, les chicanes permettant le passage de l'eau d'une rainure à l'autre seraient réalisées soit dans des pièces de forme comme selon les figures 3 et 3a, soit directement dans les embouts (610) et (611).

Notons également que la retenue des différents éléments de l'appareil est assurée par une vis centrale (80) et un écrou supérieur (81).

Selon les modes de réalisations précédemment décrits et illustrés, les rainures (10, 10a, 10b, 10c, 10d, 10e, 10f, etc.) ainsi que les nervures en saillie (31) sont solidaires du tube interne (3). Par exemple, les rainures (10) sont usinées ou moulées avec le tube interne (3), mais il pourrait en être autrement sans pour autant sortir du cadre de l'invention. Ainsi, elles pourraient être solidaires et par exemple usinées à la surface intérieure du tube externe (5), ou alors être solidaires d'un tube indépendant intermédiaire, disposé entre le tube interne (3) et le tube externe (5).

Il va de soi que le nombre de rainures de circulation d'eau dans l'appareil pourraient être différent de 6. Par exemple, il peut être de 4 ,8, 10, 12 ou tout autre nombre pair dans le cas où l'entrée de l'eau et la sortie de l'eau seraient situées du même côté de l'appareil, et de 3, 5, 7, 9 ou tout autre nombre impair dans le cas où l'entrée de l'eau et la sortie de l'eau seraient situées respectivement d'un côté et de l'autre de l'appareil, comme dans la réalisation de la figure 1.

De plus, l'empilage des aimants tel qu'il est prévu dans le mode de réalisation de la figure 6, pourrait être semblable à celui de la figure 1, c'est à dire un empilage dont les polarités des différents aimants nécessitent la présence d'entretoises (2). Il faut noter aussi que l'empilage d'aimants pourrait être remplacé par un seul aimant ou une colonne aimantée de dimensions équivalentes audit empilage.

Les aimants permanents utilisés sont avantageusement monobloc et ont la forme d'une bague de faible épaisseur, comme cela est plus particulièrement représenté à la figure 10. Toutefois, les aimants-bagues pourraient être constitués de plusieurs éléments et notamment de deux éléments (1', 1''), tel que cela est représenté à la figure 11. Notons aussi que les aimants permanents pourraient être de simples disques, tel que cela est illustré à la figure 12.

## Revendications

1. Appareil de traitement de l'eau d'axe de symétrie générale (XX') comprenant une colonne aimantée (1) contenue dans un tube interne (3) et un tube externe (5) et comprenant un embout inférieur (60, 600) et un embout supérieur (61, 610), l'eau entrant dans l'appareil par un orifice d'entrée (9) et sortant de celui-ci par une orifice de sortie (14), tandis qu'elle circule dans l'appareil dans un espace périphérique (e) ménagé entre ledit tube interne (3) et ledit tube externe (5), caractérisé en ce que l'espace périphérique (e) comprend une succession de rainures (10, 10a, 10b, 10c, 10d, 10e, 10f) s'étendant entre l'embout inférieur (60, 600) et l'embout supérieur (61, 610) reliées successivement les unes aux autres par une chicane supérieure (121), puis une chicane inférieure (120), chacune des rainures étant limitée latéralement par des nervures en saillie (31).

2. Appareil selon la revendication 1, caractérisé en ce que les rainures (10, 10a, 10b, 10c, 10d, 10e, 10f) sont parallèles les unes aux autres et sont inclinées pour former un angle aigu (A) par rapport à un plan diamétral passant par l'axe (XX').

3. Appareil selon la revendication 1, caractérisé en ce que les rainures (10, 10a, 10b, 10c, 10d, 10e, 10f) sont parallèles à l'axe (XX').

4. Appareil selon l'une quelconque des revendications 1 à 3, caractérisé en ce que la nervure en saillie (31a) séparant la rainure d'entrée d'eau (10a) de la rainure de sortie d'eau (10f), s'étend sur toute la hauteur (H) de l'espace périphérique, tandis que les autres nervures (31b, 31c, 31d, 31e, 31f) sont plus courtes pour s'étendre alternativement que sur la partie inférieure et sur la partie supérieure, pour créer ainsi les chicanes respectivement supérieures (121) et inférieures (120).

5. Appareil selon l'une quelconque des revendications 1 à 3, caractérisé en ce que toutes les nervures en saillie s'étendent sur la hauteur totale (H) de l'espace périphérique et les chicanes supérieures et inférieures sont réalisées dans l'embout supérieur (610) ou dans une pièce de forme supérieure (40) et dans l'embout inférieur (600) ou dans une pièce de forme inférieure (41).

6. Appareil selon l'une quelconque des revendications 4 ou 5, caractérisé en ce que les rainures (10, 10a, 10b, 10c, 10d, 10e, 10f) sont disposées sur la paroi périphérique externe du tube interne (3).

7. Appareil selon l'une quelconque des revendications 4 ou 5, caractérisé en ce que les rainures (10, 10a, 10b, 10c, 10d, 10e, 10f) sont disposées sur la paroi périphérique interne du tube externe (5).

8. Appareil selon l'une quelconque des revendications 4 ou 5, caractérisé en ce que les rainures (10, 10a, 10b, 10c, 10d, 10e, 10f) sont disposées sur la paroi d'un tube indépendant intermédiaire.

9. Appareil selon l'une quelconque des revendications précédentes, caractérisé en ce que l'embout inférieur (60, 600) comprend un orifice d'entrée d'eau (9), tandis que l'embout supérieur (61, 610) comprend l'orifice de sortie d'eau (14).

10. Appareil selon l'une quelconque des revendications 1 à 8, caractérisé en ce que l'embout inférieur (60, 600) comprend un orifice d'entrée d'eau (9) et un orifice de sortie d'eau (14).

11. Appareil selon la revendication 10, caractérisé en ce que l'embout inférieur (60, 600) comprend une saillie inférieure cylindrique (601) d'axe (ZZ') perpendiculaire à l'axe (XX') de symétrie générale dudit appareil, et qui comprend selon ledit axe (XX'), l'orifice d'entrée d'eau (9) et l'orifice de sortie d'eau (14)

12. Appareil selon l'une quelconque des revendications précédentes, caractérisé en ce que la colonne aimantée est constituée par un empilage d'aimants permanents (1) qui ont la forme de bagues de faible épaisseur.

## Patentansprüche

1. Apparat zur Behandlung von Wasser mit einer Symmetriehauptachse (XX'), umfassend eine magnetische Säule (1) enthalten in einem inneren Rohr (3) und einem äußeren Rohr (5) und umfassend einen unteren Aufsatz (60, 600) und einen oberen Aufsatz (61, 610), wobei das Wasser in den Apparat durch eine Eintrittsöffnung (9) eintritt und diesen durch eine Austrittsöffnung (14) verläßt, während es innerhalb des Apparates in einen peripher angeordneten Raum (e) zwischen dem besagten inneren Rohr (3) und dem besagten äußeren Rohr (5) zirkuliert, gekennzeichnet durch den peripheren Raum (e) mit einer Folge von sich zwischen dem unteren Aufsatz (60, 600) und dem oberen Aufsatz (61, 610) erstreckenden, aufeinander folgend miteinander zickzackförmig durch einen oberen Durchlaß (121) und einen unteren Durchlaß (120) verbundenen Rinnen (10, 10a, 10b, 10c, 10d, 10e, 10f), wobei jede der Rinnen seitlich durch vorspringende Rippen (31) begrenzt ist.

2. Apparat gemäß Anspruch 1, dadurch gekennzeichnet, daß die Rinnen (10, 10a, 10b, 10c, 10d, 10e, 10f) parallel zueinander angeordnet und geneigt sind und dabei einen spitzen Winkel (A) in Bezug auf eine die Achee (XX') schneidende Querebene bilden.

3. Apparat gemäß Anspruch 1, dadurch gekennzeichnet, daß die Rinnen (10, 10a, 10b, 10c, 10d, 10e, 10f) parallel zur Achse (XX') sind.

4. Apparat gemäß einem beliebigen der Ansprüches 1 bis 3, gekennzeichnet durch die die Wassereintrittsrinne (10a) von der Wasseraustrittsrinne (10f) trennende und sich über die gesamte Höhe (H) des peripheren Raumes erstreckende vorspringende Rippe (31a), während die anderen Rippen (31b, 31c, 31d, 31e, 31f) zu kurz sind, um sich abwechselnd über den unteren Teil und über den oberen Teil zu erstrecken und so die oberen (121) beziehungsweise die unteren (120) Durchlässe schaffen.

5. Apparat gemäß einem beliebigen der Ansprüche 1 bis 3, dadurch gekennzeichnet, daß alle vorspringenden Rippen sich über die gesamte Höhe (H) des peripheren Raumes erstrecken und die oberen und die unteren Durchlässe in dem oberen Aufsatz (610) oder in einem Teil der oberen Form (40) und im unteren Aufsatz (600) oder in einem Teil der unteren Form (41) verwirklicht sind.

6. Apparat gemäß einem der Ansprüche 4 oder 5, dadurch gekennzeichnet, daß die Rinnen (10, 10a, 10b, 10c, 10d, 10e, 10f) außen auf der peripheren Wand des inneren Rohres (3) angeordnet sind.

7. Apparat gemäß einem der Ansprüche 4 oder 5, dadurch gekennzeichnet, daß die Rinnen (10, 10a, 10b, 10c, 10d, 10e, 10f) innen auf der peripheren Wand des äußeren Rohres (5) angeordnet sind.

8. Apparat gemäß einem der Ansprüche 4 oder 5, dadurch gekennzeichnet, daß die Rinnen (10, 10a, 10b, 10c, 10d, 10e, 10f) auf der Wand eines separaten dazwischenliegenden Rohres angeordnet sind.

9. Apparat gemäß einem beliebigen der vorhergehenden Ansprüche, dadurch gekennzeichnet, daß der untere Aufsatz (60, 600) eine Wassereintrittsöffnung (9) umfaßt, während der obere Aufsatz (61, 610) eine Wasseraustrittsöffnung (14) umfaßt

10. Apparat gemäß einem beliebigen der Ansprüche 1 bis 8, dadurch gekennzeichnet, daß der untere Aufsatz (60, 600) eine Wassereintrittensöffnung (9) und eine Wasseraustrittsöffnung (14) umfaßt.

11. Apparat gemäß Anspruch 10, dadurch gekennzeichnet, daß der untere Aufsatz (60, 600) einen unteren Vorsprung (601) umfaßt, der zylindrisch zur Achse (ZZ') und senkrecht zur Symmetriehauptachse (XX') des Apparates liegt und der in der besagten Achse (ZZ') die Wassereintrittsöffnung (9) und die Wasseraustrittsöffnung (14) umfaßt.

12. Apparat gemäß einem beliebigen der vorhergehenden Ansprüche, dadurch gekennzeichnet, daß die magnetische Säule durch einen Stapel Permanentmagnete (1) gebildet ist, die die Form von Ringen von geringer Dicke haben.

## Claims

1. Water treatment unit with an axis of general symmetry (XX'), comprising a magnetised column (1) contained in an internal tube (3) and an external tube (5) and comprising a lower connecting piece (60, 600) and an upper connecting piece (61, 610), wherein the water enters the unit via an inlet (9) and exits via an outlet (14), while in the unit it circulates in a peripheral area (e) provided between said internal tube (3) and said external tube (5), characterised in that said peripheral area (e) comprises a series of grooves (10, 10a, 10b, 10c, 10d, 10e, 10f), which extend between said lower connecting piece (60, 600) and said upper connecting piece (61, 610) and are interconnected successively by an upper baffle plate (121) and then a lower baffle plate (120), each of said grooves being laterally bounded by protruding ribs (31).

2. Unit according to Claim 1, characterised in that the grooves (10, 10a, 10b, 10c, 10d, 10e, 10f) are parallel to one another and are inclined to form an acute angle (A) relative to a diametric plane passing through the axis (XX').

3. Unit according to Claim 1, characterised in that the grooves (10, 10a, 10b, 10c, 10d, 10e, 10f) are parallel to the axis (XX').

4. Unit according to any one of Claims 1 to 3, characterised in that the protruding rib (31a) separating the water inlet groove (10a) from the water outlet groove (10f) extend along the entire height (H) of the peripheral area, whilst the other ribs (31b, 31c, 31d, 31e, 31f) are shorter so that they may extend along the lower section and the upper section alternately to thus form the upper (121) and lower (120) baffle plates respectively.

5. Unit according to any one of Claims 1 to 3, characterised in that all the protruding ribs extend along the entire height (H) of the peripheral area, and the upper and lower baffle plates are arranged in the upper connecting piece (610) or in an upper segment (40) and in the lower connecting piece (600) or in a lower segment (41) of the structure.

6. Unit According to either one of Claims 4 or 5, characterised in that the grooves (10, 10a, 10b, 10c, 10d, 10e, 10f) are positioned on the outer peripheral wall of the internal tube (3).

7. Unit according to either one of Claims 4 or 5, characterised in that the grooves (10, 10a, 10b, 10c, 10d, 10c, 10f) are positioned on the inner peripheral wall or the external tube (5).

8. Unit according to either one of Claims 4 or 5, characterised in that the grooves (10, 10a, 10b, 10c, 10d, 10e, 10f) are positioned on the wall of an independent intermediate tube.

9. Unit according to any one of the preceding claims, characterised in that the lower connecting piece (60, 600) comprises a water inlet (9), whilst the upper connecting piece (61, 610) comprises the water outlet (14).

10. Unit according to any one of Claims 1 to 8, characterised in that the lower connecting piece (60, 600) comprises a water inlet (9) and a water outlet (14).

11. Unit according to Claim 10, characterised in that the lower connecting piece (60, 600) comprises a lower cylindrical projection (601) of the axis (ZZ') perpendicular to the axis (XX') of general symmetry of said unit, and the water inlet (9) and water outlet (14) are provided along said axis (XX').

12. Unit according to any one of the preceding claims, characterised in that the magnetised column is made up of an array of permanent magnets (1) in the form of thin rings.
